# EUROPÄISCHE PATENTSCHRIFT

(11) **EP 3 408 476 B1**
(45) Veröffentlichungstag und Bekanntmachung des Hinweises auf die Patenterteilung: **15.03.2023**
(21) Anmeldenummer: 16828926.2
(22) Anmeldetag: 20.12.2016
(51) Int. Cl.: E05B 17/10, E05B 85/02, B60Q 3/66, B60Q 1/00, B60Q 1/32, B60Q 3/217, B60Q 3/267, F21V 8/00, B60Q 1/26

(54) **KRAFTFAHRZEUGTÜRSCHLOSS**
MOTOR-VEHICLE DOOR LOCK
SERRURE POUR PORTE DE VÉHICULE AUTOMOBILE

(30) Priorität: 25.01.2016 DE 102016101226
(43) Veröffentlichungstag der Anmeldung: 05.12.2018
(73) Patentinhaber: Kiekert AG, 42579 Heiligenhaus (DE)
(72) Erfinder: KUNST, Frank, 59348 Lüdinghausen (DE)
(86) Internationale Anmeldenummer: PCT/DE2016/100604
(87) Internationale Veröffentlichungsnummer: WO 2017/129159

(56) Entgegenhaltungen:
- EP-A2- 1 110 822
- DE-A1- 10 110 303
- DE-A1- 10 115 378
- DE-A1- 19 702 174
- DE-A1- 19 757 085
- DE-A1-102008 050 434
- JP-A- 2005 019 154

## Beschreibung

Die Erfindung betrifft ein Kraftfahrzeugtürschloss, umfassend ein Gesperre, wobei das Gesperre eine Drehfalle und mindestens eine Sperrklinke umfasst, ein Gehäuse mit einer elektrischen Kontaktierung und einem in das Gehäuse integrierten Leuchtmittel, wobei das Leuchtmittel mit einem Mittel zum Transport des mittels des Leuchtmittels emittierten Lichts zusammenwirkt. Der Einsatz von Kraftfahrzeugen im Straßenverkehr bedingt, dass diese eine Reihe von Sicherheitsvorschriften erfüllen müssen. Insbesondere die Beleuchtung eines Kraftfahrzeugs ist in den vergangenen Jahren mehr und mehr in den Vordergrund gerückt. So gibt es heute bereits Fahrzeuge, die über ein Fahrlicht verfügen, das unabhängig vom Abblendlicht, mit dem in der Dunkelheit gefahren wird, auch bei Tag das Fahrzeug ausleuchtet und somit einen Teil zur Erhöhung der Sicherheit im Verkehr leisten. Das Licht am Kraftfahrzeug ist folglich ein sicherheitsrelevantes Mittel.

Bekannt ist es darüber hinaus ebenfalls, dass zur Erhöhung der Sicherheit für den Fahrzeugführer wie auch die weiteren Verkehrsteilnehmer eine sich öffnende Tür und/oder Klappe und/oder Haube eines Kraftfahrzeugs mit einem Leuchtmittel, Reflektoren oder lumineszierenden Bestandteilen ausführbar ist, so dass den weiteren Verkehrsteilnehmern mittels eines Lichteffekts anzeigbar ist, dass Teile des Kraftfahrzeugs bewegt werden. Dies ist insbesondere bei eingeschränkter Sicht und/oder Dunkelheit vorteilhaft.

So ist es beispielsweise aus der DE 10 2014 003 505 A1 bekannt geworden, dass in einem Kraftfahrzeugtürschloss und insbesondere im sichtbaren Bereich des Türschlosses ein Leuchtmittel angeordnet ist, das den Wirkbereich zwischen Schlosshalter und Drehfalle im Schloss ausleuchten kann. Als Leuchtmittel kann vorzugsweise eine Leuchtdiode eingesetzt werden, so dass bei einem Öffnen zum Beispiel einer Seitentür des Kraftfahrzeugs ein optischer Effekt in Form eines Lichtes für die weiteren Verkehrsteilnehmer darstellbar ist. Den weiteren Verkehrsteilnehmern wird somit insbesondere bei eingeschränkter Sicht oder Dunkelheit mittels des Leuchtmittels angezeigt, dass sich die Tür öffnet, so dass eine Gefahrensituation unterbindbar ist.

Aus der DE 20 2008 005 174 U1 ist eine Kraftfahrzeugschlossanordnung für eine Kraftfahrzeugtür bekannt geworden, bei der das Kraftfahrzeugschloss mit einer Leuchtanordnung ausgebildet ist, wobei die Leuchtanordnung eine elektrische Lichtquelle aufweist, deren Lichtstrahlung über ein Leuchtmittel abgebbar ist. In einer Ausführungsform kann die Lichtquelle so in das Schlossgehäuse eingelassen sein, dass nur die lichtabstrahlende Oberfläche der Lichtquelle aus dem Schlossgehäuse nach außen weist. Bevorzugt offenbart die DE 20 2008 005 174 U1 aber eine Lichtquelle, die mit einem Lichtleiter zusammenwirkt, die das Licht der Lichtquelle an ein Leuchtelement weiterleitet, wobei das Leuchtelement eine Optik zur Abgabe der Lichtstrahlung umfasst.

DE 10 2008 050 434 A1 bildet die Basis für den Oberbegriff des Anspruchs 1 und beschreibt, ein Leuchtelement 4 in einer Kraftfahrzeugschlossanordnung anzuordnen, wobei das Leuchtelement 4 vom Kraftfahrzeugschloss 1, das eine Schlossfalle umfasst, räumlich getrennt ausgebildet ist. Eine im Schlossgehäuse 3 angeordnete Lichtquelle 5 emittiert Licht, das in einen Lichtleiter 6 abgegeben wird und über den Lichtleiter 6 zu einer Austrittsfläche des Leuchtelements 4 transportiert wird. Die Austrittsfläche umfasst dabei eine Optik 7 zur Abgabe der Lichtstrahlung und kann mit Bildgebungsmitteln 4b versehen sein. Mittels des Bildgebungsmittels 4b können zum Beispiel Embleme 4a ausgeleuchtet werden, oder das Bildgebungsmittel 4b weist zur Erzeugung unterschiedlich spektrale Lichtdurchlässigkeiten 4a auf, mit der wiederum Embleme erzielbar sind.

DE 101 10 303 A1 beschreibt einen verschließbaren Flügel für ein Kraftfahrzeug, mit einem ein Schloss 1 aufweisenden Schließsystem, einer mechanisch betätigbaren Einrichtung 2 des Schließsystems, mit der das Schloss 1 betätigbar und/oder der aktuelle Schlosszustand anzeigbar ist, einem Koppelmechanismus 4, über den die mechanisch betätigbare Einrichtung 2 mit dem Schloss 1 mechanisch gekoppelt ist, und Beleuchtungsvorrichtungen 6, 6', denen jeweils über eine Verbindungsleitung 7 Energie zuführbar ist. Der Koppelmechanismus 4 weist die Verbindungsleitung 7 auf. Der Koppelmechanismus 4 umfasst einen Bowdenzug 43, 48. Die Bowdenhülle 48 des Bowdenzugs 43, 48 weist die Verbindungsleitung 7 auf. Die Verbindungsleitung ist als Wellenleiter 7 ausgebildet. Die mechanisch betätigbare Einrichtung wird durch einen Innenverriegelungsknopf 2 oder durch einen Türinnenöffner 3 gebildet. Die Beleuchtungsvorrichtung 6 dient der Beleuchtung des Türinnenöffners 3 bei Dunkelheit, die Beleuchtungsvorrichtung 6 ist in den Innenverriegelungsknopf 2 integriert.

DE 197 02 174 A1 beschreibt einen Lichtwellenleiter 8, L zur Beleuchtung innerhalb von Kraftfahrzeugen. Der Lichtwellenleiter 8, L besteht aus einem polymeren Lichtleitkörper 2, in dem das von einer Lichtquelle 9 stirnseitig eingespeiste Licht durch Totalreflexion an den Grenzflächen seines Umfanges transportiert und aus dem das Licht durch partielle Unterbrechung der Totalreflexion quer zur Transportrichtung des Lichtes ausgekoppelt wird. Die Oberfläche des Lichtwellenleiters 8, L ist teilweise aufgerauht 5. Das an der Innenseite der aufgerauhten Oberfläche 5 reflektierte Licht tritt auf der der aufgerauhten Oberfläche 5 gegenüberliegenden Seite des Lichtwellenleiters 8, L aus. Der Lichtwellenleiter 8, L besteht aus einer mit einer Deckschicht 1 ummantelten flexiblen Faser, deren Deckschicht 1 auf einem Teil ihres Umfangs entfernt ist und deren unter der entfernten Deckschicht 1 freigelegte Oberfläche aufgerauht 5 ist. Das an der Innenseite der aufgerauhten Oberfläche 5 reflektierte Licht auf der der aufgerauhten Oberfläche 5 diametral gegenüberliegenden Seite des Lichtwellenleiters 8, L tritt durch die Deckschicht 1 aus. In einer Fahrzeugtür 15 ist unterhalb der Glasscheibe 10 ein Lichtwellenleiter 8, L in der Türverkleidung 11 so eingebaut, dass dieser das von der Lichtquelle 9 erzeugte Licht als Lichtvorhang austrägt, ohne selbst für den Fahrzeuginsassen sichtbar zu sein. Mit dem erzeugten Lichtvorhang lassen sich die Armlehne 13, der Türöffner 12 und die Bedienungselemente 14 für die elektrischen Fensterheber oder dergleichen blendfrei beleuchten.

Die aus dem Stand der Technik bekannten Anzeigemittel bzw. Mittel zum Ausleuchten weisen zum Teil den Nachteil auf, dass ein Einbau in zum Beispiel eine Heckklappe oder eine Tür schwierig ist bzw. eine komplizierte Montage erfordern.

Aufgabe der Erfindung ist es, ein verbessertes Kraftfahrzeugtürschloss bereitzustellen, die die Nachteile des Standes der Technik überwindet.

Darüber hinaus ist es Aufgabe der Erfindung, ein leicht integrierbares Leuchtmittel für eine Schließeinrichtung eines Kraftfahrzeugs zugehöriges Leuchtmittel bereitzustellen, dass konstruktiv einfach und kostengünstig ausbildbar ist und aufgrund des konstruktiven Aufbaus die Montage im Kraftfahrzeug erleichtert.

Die Lösung der Aufgabe erfolgt erfindungsgemäß durch die Merkmale des unabhängigen Patentanspruchs 1. Vorteilhafte Ausgestaltungen der Erfindung sind in den Unteransprüchen angegeben.

Die Erfindung schlägt ein Kraftfahrzeugtürschloss vor, umfassend ein Gesperre, wobei das Gesperre eine Drehfalle und mindestens eine Sperrklinke umfasst, ein Gehäuse mit einer elektrischen Kontaktierung und einem in das Gehäuse integrierten Leuchtmittel, wobei das Leuchtmittel mit einem Mittel zum Transport des mittels des Leuchtmittels emittierten Lichts zusammenwirkt, dadurch gekennzeichnet, dass das Leuchtmittel auf einem Elektrokomponententräger angeordnet ist, wobei ein flexibles Mittel zum Transport des Lichtes eingesetzt ist, wobei das flexible Mittel als Lichtleiter ausgebildet ist, wobei separate Lichtleiter im Kraftfahrzeugtürschloss angeordnet sind, wobei die Lichtleiter jeweils eine Lichtaustrittsfläche aufweisen, wobei eine Lichtaustrittsfläche als umlaufende Lichtaustrittsfläche um das Einlaufmaul des Kraftfahrzeugtürschlosses herum angeordnet ist und eine weitere Lichtaustrittsfläche eine kreisförmige Lichtaustrittsfläche bildet, die bei einer geöffneten Fahrertür Licht in Richtung des rückwärtigen Bereichs des Kraftfahrzeugs emittiert.

Durch die Ausbildung des Lichtleiters als flexibles Mittel ist nun die Möglichkeit gegeben, das in der Schließeinrichtung erzeugte Licht an beliebige Stellen im Kraftfahrzeugschloss zu leiten ohne, dass auf konstruktive Einschränkungen geachtet werden muss, da das flexible Mittel leicht und nahezu uneingeschränkt im Kraftfahrzeugschloss verlegbar ist. Darüber hinaus kann mittels des flexiblen Mittels auch leicht das mittels des Leuchtmittels erzeugte Licht an weitere Bereiche im Kraftfahrzeug weitergeleitet werden. Das Weiterleiten an vom Schloss beabstandete Bereiche ist dabei ebenfalls nur bedingt an konstruktive Vorgaben geknüpft. Der flexible Lichtleiter ermöglicht es hierbei, das Licht einerseits an entfernte Bereiche, das heißt vom Schloss entfernte Bereiche zu leiten und kann darüber hinaus auch beliebig durch das Kraftfahrzeug hindurch verlegt werden. Benötigt wird lediglich eine Durchführöffnung, die es dem flexiblen Lichtleiter ermöglicht, hindurchgeführt zu werden. Der Einbau eines flexiblen Lichtleiters ist dabei sehr leicht möglich und kann derart erfolgen, dass ein Verlegen des flexiblen Lichtleiters auch erst nach der Montage des Schlosses erfolgen kann. Ein komplizierter Einbau eines starren Lichtleiters ist dabei einerseits an die Montage des Schlosses und andererseits an geometrische Gegebenheiten zum Führen des Lichtleiters gebunden. Der Einsatz eines flexiblen Lichtleiters ermöglicht hingegen in vorteilhafter Weise ein Verlegen auch in einen Bereich, der schwer zugänglich ist, da der Lichtleiter flexibel auch zum Beispiel um Aggregate und/oder Module, wie beispielsweise eine Fensterführung, herum verlegbar ist.

Die Erfindung betrifft eine Schließeinrichtung für ein Kraftfahrzeug, die ein Kraftfahrzeugtürschloss ist. Als Schließeinrichtung werden hierbei bevorzugt Schlösser angesehen, die im Bereich von Klappen, Schiebetüren, Seitentüren, Hauben und/oder Abdeckungen zum Einsatz kommen. Eben überall dort, wo mittels einer Schließeinrichtung ein Bauteil des Kraftfahrzeugs bewegt wird und mittels des Schließsystems in einer fixierten Position gehalten ist. Dabei kommt wie einleitend dargestellt dem Leuchtmittel eine Sicherheitsfunktion zu. Neben der Sicherheitsfunktion kann aber auch eine ausleuchtende Funktion umfasst sein. Ist beispielsweise das Schließsystem bzw. die Schließeinrichtung im Bereich einer Abdeckung, wie beispielsweise einer Mittelarmlehnenabdeckung eingerichtet, so kann bei einem Öffnen der Mittelarmlehnenabdeckung mittels des Leuchtmittels ein Mittelarmlehnenablagefach ausgeleuchtet werden. Darüber hinaus kann zum Beispiel ein in die Haube integriertes Schließsystem mit einem Leuchtmittel dazu dienen, Bereiche des Motorraums umfassend oder gezielt auszuleuchten, um beispielsweise einen Sicherungskasten und/oder einen Einfüllbereich im Motorraum auszuleuchten.

Die Schließeinrichtung umfasst ein Gesperre aus Drehfalle und mindestens einer Sperrklinke. Ein derartiges Gesperre hat sich als Schließsystem etabliert und bildet eine Möglichkeit, ein sicheres Fixieren der Bauteile am Kraftfahrzeug zu ermöglichen. Neben einer umfangreichen Funktion, die ein Schließsystem in zum Beispiel einer Kraftfahrzeugseitentür zusätzlich umfassen kann, kann das Gesperre aber auch Teil einer Schließeinrichtung sein, die beispielsweise im Bereich eines Hilfsschlosses angeordnet ist, so dass der Schließeinrichtung lediglich eine Schließ- und Ausleuchtfunktion zukommt.

Die Schließeinrichtung umfasst ferner ein Gehäuse mit einer elektrischen Kontaktierung. Eine elektrische Kontaktierung kann im einfachsten Falle aus einer elektrischen Leitung gebildet sein. Darüber hinaus kann die elektrische Kontaktierung auch über eine zum Beispiel in der Schließeinrichtung integrierte Leiterplatte erfolgen. Vorstellbar ist es hierbei auch, dass ein im Gehäuse eingefügter und/oder integrierter Elektrokomponententräger in Form von elektrischen Leiterbahnen die elektrische Kontaktierung für das Leuchtmittel bildet. Das Leuchtmittel kann somit unmittelbar im Gehäuse, auf einer Leiterplatte und/oder mittels Leiterbahnen kontaktiert werden. Die elektrische Stromversorgung für das Leuchtmittel erfolgt dabei über die Schließeinrichtung und bevorzugt über eine im Gehäuse der Schließeinrichtung vorgesehene elektrische Kontaktierung.

Das Leuchtmittel ist in das Gehäuse integriert, wobei das Leuchtmittel mit einem Lichtleiter zum Transport des mittels des Leuchtmittels emittierten Lichtes zusammenwirkt. Integriert heißt hierbei, dass zumindest eine elektrische Kontaktierung des Leuchtmittels durch das Gehäuse bereitgestellt wird. Das Leuchtmittel selbst kann dabei innerhalb, am Rand oder außerhalb des Gehäuses angeordnet sein. Neben der Anordnung des Leuchtmittels, das bevorzugt eine lichtemittierende Diode ist, am oder im Gehäuse als integrales Leuchtmittel wirkt das Leuchtmittel mit dem Lichtleiter zusammen. Dabei ist es möglich, das im Schließsystem bzw. der Schließeinrichtung erzeugte Licht an einen Funktionsort weiterzuleiten. Ein Funktionsort ist dabei der Bereich, der vom Licht ausgeleuchtet wird, der eine Anzeigefunktion umfasst und/oder der beispielsweise ein Zeichen hinterleuchtet bzw. illuminiert. Mittels des Lichtleiters kann somit das durch das Leuchtmittel emittierte Licht transportiert werden.

Erfindungsgemäß ist der Lichtleiter flexibel. Der Einsatz eines flexiblen Lichtleiters bietet dabei den Vorteil, dass der Lichtleiter durch das Schließsystem bzw. die Schließeinrichtung hindurch leicht verlegbar ist, da der flexible Lichtleiter um die weiteren Bestandteile der Schließeinrichtung sehr leicht herumführbar ist. Dies erleichtert die Ausleuchtung des Schlosses und bietet eine konstruktiv günstige Möglichkeit, das Licht an den im oder am Schloss angeordneten auszuleuchtenden Bereich weiterzuleiten. Es ist somit die Möglichkeit geschaffen, das Leuchtmittel an einer bevorzugten und konstruktiv günstigen Stelle in der Schließeinrichtung anzuordnen und das Licht an die dafür vorgesehene Austrittsöffnung weiterzuleiten.

In einer vorteilhaften Ausgestaltungsform der Erfindung ist der Lichtleiter frei im oder am Gehäuse verlegbar ausgebildet. Neben der Verlegung des flexiblen Lichtleiters kann der Lichtleiter auch zum Beispiel außerhalb des Gehäuses verlegt sein. Dies bietet den Vorteil, dass der innere Bereich der Schließeinrichtung für die Funktionen der Schließeinrichtung zur Verfügung steht. Eine freie Verlegung bedeutet hierbei, dass der Lichtleiter nicht zwangsläufig vollumfänglich geführt ist, sondern, dass der Lichtleiter lediglich in den Bereichen geführt ist, in denen ein Fixieren der Lichtleiters notwendig ist. In anderen Bereichen kann der Lichtleiter ohne Fixierungen und/oder Führungen verlegt sein. Dies bietet den Vorteil einer konstruktiv einfachen und kostengünstigen Integration in die Schließeinrichtung. Darüber hinaus kann der Lichtleiter somit auch beispielsweise an weitere Bauteile des Kraftfahrzeugs weitergeleitet werden und von den weiteren Bauteilen gehalten und/oder geführt sein. Ist die Schließeinrichtung beispielsweise ein Kraftfahrzeugtürschloss, so kann der Lichtleiter aus dem Kraftfahrzeugtürschloss herausgeführt sein und beispielsweise in einem Türmodul fixiert werden. Ein Türmodul umfasst beispielsweise weitere Funktionselemente wie einen Fensterheber und/oder eine Innenbetätigung für die Kraftfahrzeugseitentür. Durch die flexible Ausbildung kann dabei der Lichtleiter auch nachträglich, das heißt nach einer Montage des Schlosses selbst im Kraftfahrzeug fixiert werden. Natürlich ist es auch vorstellbar, zuerst den Lichtleiter zumindest bereichsweise zu fixieren und dann das Kraftfahrzeugschloss bzw. die Schließeinrichtung zu montieren. In diesem Fall kann der Lichtleiter adaptierbar in die Schließeinrichtung ausgeführt sein.

Vorzugsweise ist die Lichtaustrittsfläche in einem in einer Einbauposition der Schließeinrichtung sichtbaren Bereich und/oder mindestens einen weiteren Bereich des Kraftfahrzeuges angeordnet. Der Lichtleiter transportiert das mittels des Leuchtmittels emittierte Licht an zum Beispiel eine Kindersicherung, das Einlaufmaul und/oder eine Notverriegelung, die unmittelbar in der Schließeinrichtung integriert ist. Darüber hinaus ist es aber ebenfalls vorstellbar, dass das mittels des Leuchtmittels emittierte Licht auf einen weiteren Bereich des Kraftfahrzeuges geleitet wird. Ein weiterer Bereich kann beispielsweise ein Türgriff, ein Schließzylinder und/oder ein Anzeigemittel, wie beispielsweise eine Funktionsanzeige, weiterleiten. In vorteilhafter Weise dient die Lichtaustrittsfläche dann als Adapter für beispielsweise einen Lichtleiter oder dient selbst unmittelbar als Optik zur Emittierung des Lichtes. Die Lichtaustrittsfläche gibt das durch das Leuchtmittel erzeugte Licht ab und kann dabei zum Beispiel bei der erfindungsgemäßen Anordnung der Lichtaustrittsfläche im Bereich des Einlaufmauls des Kraftfahrzeugschlosses unmittelbar als Lichtquelle zur Anzeige der geöffneten Tür dienen. Vorteilhaft ist hierbei, dass im Bereich des Einlaufmauls die Drehfalle große Bereiche des Einlaufmauls freigibt, da bei einer geöffneten Tür die Drehfalle in einer Einfangposition angeordnet ist, so dass ein Schlosshalter oder ein Schließbolzen mit der Drehfalle zusammenwirken kann, wohingegen in einer geschlossenen Position der Drehfalle, das heißt in einer gesperrten Position die Drehfalle Bereiche des Einlaufmauls verdeckt. Darüber hinaus kann die Lichtaustrittsfläche auch beispielsweise an einem Lichtleiter enden, der das Licht zum Beispiel in Form einer Corona-Beleuchtung um einen Schließzylinder herum, das heißt einer Einstecköffnung zum manuellen Öffnen der zum Beispiel Heckklappe angeordnet ist. Die Lichtaustrittsfläche kann aber auch gleichzeitig als Optik zur Anzeige einer Funktion, das heißt zum Beispiel einer Funktionsstellung der Schließeinrichtung genutzt werden. Wird der flexible Lichtleiter zum Beispiel in einen Bereich geleitet, der von außen zum Beispiel durch eine Scheibe sichtbar ist, so kann mittels des Lichtleiters visuell angezeigt werden, dass die Schließeinrichtung verriegelt vorliegt. In vorteilhafter Weise kann dabei das Leuchtmittel auch farbig ausgestaltet sein, so dass in einem unverriegelten Zustand zum Beispiel grünes Licht durch die Lichtaustrittsfläche geleitet wird, wohingegen in einem verriegelten Zustand rotes Licht durch die Lichtaustrittsfläche emittiert wird.

In einer weiteren vorteilhaften Ausführungsform der Erfindung weist die Lichtaustrittsfläche lichtstreuende und/oder lichtfokussierende Eigenschaften auf. Die Lichtaustrittsfläche kann unmittelbar durch den Lichtleiter gebildet werden. Vorstellbar ist aber auch, dass eine sich verjüngende, verteilende und/oder vergrößernde Lichtaustrittsfläche an den Lichtleitern anschließt. Je nach Lage und Funktion der Lichtaustrittsfläche kann es dabei vorteilhaft sein, wenn das durch den Lichtleiter transportierte Licht gestreut wird und/oder mittels zum Beispiel reflektierender Oberfläche fokussiert wird. Eine lichtstreuende Eigenschaft kann beispielsweise dann gegeben sein, wenn das Licht möglichst breit verteilt werden soll, so dass das Licht von möglichst vielen Seiten sichtbar sein soll. Eine lichtfokussierende Eigenschaft kann dann vorteilhaft sein, wenn die Lichtaustrittsfläche auf einen speziellen Bereich gerichtet ist, so dass beispielsweise ein Bereich unter einer Haube oder unterhalb einer Tür oder unterhalb einer Heckklappe ausgeleuchtet werden soll.

Eine weitere vorteilhafte Ausgestaltungsform der Erfindung ergibt sich dann, wenn am Lichtleiter und/oder im Bereich der Lichtaustrittsfläche des Lichtleiters eine konvexe und/oder konkave Spiegelfläche angeordnet ist. Mittels der konvexen und/oder konkaven Spiegelfläche sind optische Elemente bereitgestellt, die es ermöglichen, den Lichtaustritt an der Lichtaustrittsfläche zu beeinflussen, das heißt im vorliegenden Falle, dass mittels der Spiegelflächen Streulicht an der Lichtaustrittsfläche reflektiert und somit zielgerichtet fokussierbar ist. Es kann somit mit einer maximalen Lichtausbeute des durch den Lichtleiter transportierten Lichtes gerechnet werden. In vorteilhafter Weise kann dabei der Lichtleiter selbst zumindest bereichsweise ebenfalls eine Spiegelfläche aufweisen bzw. von einer spiegelnden Fläche umgeben bzw. ummantelt sein. Somit kann selbst bei geringen Lichtleistungen eines Leuchtmittels eine maximale Lichtmenge an der Lichtaustrittsfläche bereitgestellt werden. Durch eine zum Beispiel konvexe Spiegelfläche im Bereich der Lichtaustrittsfläche, wobei der Lichtleiter bevorzugt in der Spiegelfläche selbst endet, das heißt, die Lichtaustrittsfläche einen Teil der Spiegelfläche bildet, steht das gesamte aus der Lichtaustrittsfläche emittierte Licht zum Beispiel als Licht für eine Sicherheitsbeleuchtung zur Verfügung. Neben einer konvexen oder konkaven Form kann die Spiegelfläche auch kegelförmig oder eben ausgebildet sein, je nach konstruktiven Möglichkeiten im Bereich der Lichtaustrittsfläche. Konvexe und/oder konkave Formen bilden vorteilhafte Ausgestaltungsvarianten. Dabei ist es natürlich ebenfalls vorstellbar, dass bei mehreren Lichtleitern konvexe, konkave, ebene und/oder kegelförmige Spiegelflächen nebeneinander und/oder ein Symbol darstellend anordnbar sind.

Wenn der Lichtleiter zumindest einen Glasfaseranteil umfasst, bevorzugt vollumfänglich aus einer Glasfaser gebildet ist, so ergibt sich eine weitere vorteilhafte Ausgestaltungsform der Erfindung. Ein aus einer Glasfaser gebildeter Lichtleiter eignet sich bevorzugt zum Transport von Licht, wobei ein Maximum an Licht vom lichtemittierenden Leuchtmittel zur Lichtaustrittsfläche leitbar ist. Neben der hervorragenden Eigenschaft der Glasfaser als lichtleitendes Element kann der aus einer Glasfaser gebildete Lichtleiter flexibel angeordnet werden. Dies ist insbesondere dann vorteilhaft, wenn von der Schließeinrichtung entfernte Bereiche des Kraftfahrzeugs auszuleuchten sind. Dies kann beispielsweise ein Führungselement, ein Schlosshalter, eine Trittleiste, ein Türgriff, ein Schließelement oder vergleichbares sein.

Bevorzugt kann der Lichtleiter aus einem optischen Silikon gefertigt sein. Optische Silikone sind transparente, flexible duroplastische Werkstoffe, welche Glas in vielen optischen Anwendungen nahe kommen und ersetzen können. Darüber hinaus kann der Lichtleiter zumindest bereichsweise oder vollständig aus Polymethylmethacrylat (PMMA) gefertigt sein. Als Werkstoffe für den Lichtleiter kommen somit Glasfaser und/oder optische Silikone und/oder PMMA in Frage und zum Einsatz.

Eine weitere vorteilhafte Ausgestaltungsform der Erfindung ergibt sich dann, wenn der Lichtleiter zumindest eine Verzweigung umfasst. Dabei kann der Lichtleiter unmittelbar im Bereich des Leuchtmittels verzweigt sein und/oder sich erst in der Schließeinrichtung und/oder erst im Bereich der Lichtaustrittsfläche, das heißt zum Beispiel an einem von der Schließeinrichtung beabstandeten Bauteil, verzweigen. Die Anzahl der Verzweigungen, also ob eine, zwei, drei oder mehr Verzweigungen vorliegen, ist abhängig von der Lichtmenge, die das Leuchtmittel emittiert, von der mittels des Lichtleiters transportierten Menge an Licht, einem Einsatz des im Lichtleiter transportierten Lichts, der benötigten Lichtmenge an der Lichtaustrittsfläche, der Lichtaufnahme des Lichtleiters, etc. Je nach konstruktiven Gegebenheiten und Anzahl benötigter Lichtaustrittsflächen können somit ein, zwei oder mehr Verzweigungen im Lichtleiter vorhanden sein. Auch wenn hier bevorzugt lediglich eine Lichtquelle bzw. ein Leuchtmittel genannt ist, so ist es erfindungsgemäß natürlich ebenfalls vorstellbar, dass zwei, drei oder mehr Leuchtmittel in der Schließeinrichtung angeordnet sind, die mit einem, zwei oder mehr Lichtleitern zusammenwirken, die wiederum Verzweigungen aufweisen können. Insbesondere in dem Fall, in dem eine hohe Lichtintensität im Bereich der Lichtaustrittsfläche notwendig ist, um beispielsweise einen Bereich unter einer Haube oder einer Abdeckung auszuleuchten, können auch mehrere Leuchtmittel an einem Lichtleiter angeschlossen sein, so dass zum Beispiel zwei Leuchtmittel ihr Licht in einen Lichtleiter hinein emittieren.

Ist mittels des Lichtleiters Licht an zumindest zwei Bereiche, insbesondere zwei unterschiedliche Bereiche, im Kraftfahrzeug leitbar, so ergibt sich wiederum eine vorteilhafte Ausgestaltungsform der Erfindung. Der Lichtleiter kann zum Beispiel an zwei Bereiche, das heißt unterschiedliche Bereiche, des Einlaufmauls Licht weiterleiten. So kann einerseits zum Beispiel eine Umrandung des Einlaufmauls mittels eines Lichtleiters und eine innere Fläche des Einlaufmauls mit einem weiteren Lichtleiter ausgeleuchtet werden. Zusätzlich könnte zum Beispiel ein dritter Lichtleiter eine Kindersicherung ausleuchten und somit für den Bediener sichtbar machen. Neben den unterschiedlichen Bereichen in der Schließeinrichtung selbst kann das Licht des Leuchtmittels mittels des Lichtleiters auch an weitere Bereiche im Kraftfahrzeug weitergeleitet werden. Ist beispielsweise neben der Schließeinrichtung eine Abdeckung angeordnet, wie sie beispielsweise bei Heckklappenschlössern zum Einsatz kommen, so kann mittels des flexiblen Lichtleiters Licht von der Schließeinrichtung an die Abdeckungen weitergeleitet werden. Die Abdeckungen weisen dann zum Beispiel transluzente und opake Bereiche auf, die dann wiederum zum Beispiel eine Marke, einen Schriftzug oder eine vorteilhafte ästhetische Form darstellen können. Gemäß der Erfindung kann das Licht aus der Schließeinrichtung mittels des flexiblen Lichtleiters leicht zu den weiteren Bereichen transportiert werden und dort zur Ausleuchtung der weiteren Bereiche zur Verfügung stehen.

Eine bevorzugte Ausführungsform der Erfindung ergibt sich dann, wenn die Lichtaustrittsfläche eine Neigung von 1° bis 10°, vorzugsweise eine Neigung von 2° bis 8° und noch bevorzugter eine Neigung von 3° bis 5°, in Bezug auf eine Lichtaustrittsöffnung des Lichtleiters aufweist. Eine Lichtaustrittsfläche oder -austrittsöffnung kann auch eine Spiegelfläche sein. In vorteilhafter Weise kann die Lichtaustrittsfläche sich dann an ein Ende des Lichtleiters anschließen. Dabei kann die sich an den Lichtleiter anschließende Lichtaustrittsfläche kegelförmig und bevorzugt unter einem Winkel von 3 bis 5° an das Ende des Lichtleiters anschließen. Durch diese bevorzugt geringen Winkel der sich an das Ende des Lichtleiters anschließenden Lichtaustrittsfläche kann eine gleichmäßige Ausleuchtung erzielt werden. Darüber hinaus wird durch eine geneigte Fläche das Licht aus dem Lichtleiter fokussiert, so dass nur geringstmögliche bis keine Lichtstrahlen als Streulicht verloren gehen.

In einer bevorzugten Ausführungsform sind der Lichtleiter und die Lichtaustrittsfläche einstückig ausgebildet. Eine einstückige Ausbildung bietet den Vorteil, dass eine leichte Montage möglich ist und andererseits eine geringstmögliche Anzahl an Grenzflächen im Lichtleiter ausgebildet sind. Das Ausbilden des Lichtleiters als lichtleitendes Element und lichtemittierendes Element bietet dabei den Vorteil, dass das Licht einerseits optimal durch den Lichtleiter geleitet wird und andererseits eine Form an der Lichtaustrittsfläche unmittelbar ausbildbar ist. Eine einstückige Ausbildung des Lichtleiters mit der Lichtaustrittsfläche beinhaltet dabei aber auch, dass der Lichtleiter Verzweigungen aufweisen kann, an die wiederum Lichtaustrittsflächen einstückig anbindbar sind.

Die Erfindung wird nachfolgend anhand von Ausführungsbeispielen näher erläutert. Es gilt jedoch der Grundsatz, dass die Ausführungsbeispiele die Erfindung nicht beschränken, sondern lediglich vorteilhafte Ausführungsformen darstellen.

Es zeigt:
- FIG. 1: eine Seitenansicht auf ein Kraftfahrzeug mit einer geschlossenen Vordertür und einer geöffneten hinteren Tür, wobei die hintere Tür an einer C-Säule angebunden ist,
- FIG. 2: eine Detailansicht gemäß II aus der FIG. 1 im Bereich eines Einlaufmauls eines Seitentürschlosses mit einem mit Verzweigungen versehenen Lichtleiter, und
- FIG. 3: eine Detailansicht gemäß dem Pfeil III aus der FIG. 2 mit alternativen Lichtaustrittsöffnungen im Einlaufbereich eines Schlosshalters.

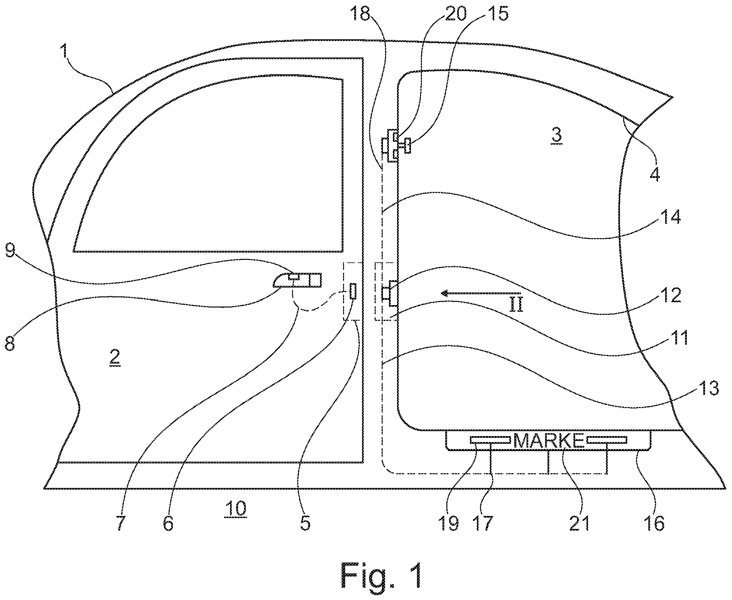

In der FIG. 1 ist eine Seitenansicht auf ein Kraftfahrzeug 1 mit einer geschlossenen Fahrertür 2 und einem geöffneten Einstiegsbereich 3 wiedergegeben. Der Einstiegsbereich 3 kann beispielsweise dadurch erzielt werden, dass eine nicht dargestellte Kraftfahrzeugtür an einer C-Säule 4 des Kraftfahrzeugs 1 schwenkbeweglich angeordnet ist. Die Fahrertür 2 ist im geschlossenen Zustand wiedergegeben.

Die Fahrertür 2 wird mittels eines Kraftfahrzeugtürschlosses 5 in der geschlossenen Position gehalten. Im Inneren des Kraftfahrzeugtürschlosses 5 ist ein Leuchtmittel 6 angeordnet, von dem aus zumindest ein Lichtleiter 7 Licht von dem Leuchtmittel 6 hin zu einem Türgriff 8 transportiert. Im Türgriff 8 ist eine Lichtaustrittsfläche 9 angeordnet, so dass einerseits der Türgriff 8 wie auch das Umfeld 10 im Bereich der Fahrertür 2 ausleuchtbar ist. In vorteilhafter Weise kann dazu der Lichtleiter 7 flexibel in der Fahrertür 2 verlegt werden.

Im Bereich des Einstiegs 3 ist ebenfalls ein Kraftfahrzeugtürschloss 11 angeordnet. Ein Leuchtmittel 12 ist innerhalb des Kraftfahrzeugtürschlosses 11 angeordnet. An das Leuchtmittel 12, das beispielsweise aus einer, zwei oder mehreren lichtemittierenden Dioden gebildet ist, sind Lichtleiter 13, 14 angebunden, so dass das Licht des Leuchtmittels 12 an eine Führung 15 und eine Einstiegsleiste 16 weiterleitbar ist. Die Lichtleiter 13, 14 weisen Verzweigungen 17, 18 auf, so dass das Licht des Leuchtmittels 12 an unterschiedliche Bereiche der Führung 15 und der Einstiegsleiste 16 weiterleitbar ist. Das Licht tritt dann an Lichtaustrittsflächen 19, 20 der Führung 15 wie auch der Einstiegsleiste 16 aus. Wie an dem Beispiel der Einstiegsleiste 16 dargestellt, kann das Licht in Form zum Beispiel einer länglichen Erstreckung einer Lichtaustrittsfläche 19 oder aber auch in Form eines Zeichens wie beispielsweise einem Markenzeichen 21 austreten.

Wie deutlich aus der FIG. 1 zu erkennen ist, bietet der Einsatz eines flexiblen Lichtleiters zum Transport des Lichtes 7, 13, 14 eine Möglichkeit, das im Kraftfahrzeugtürschloss 5, 11 emittierte Licht leicht an zum Beispiel einen Türgriff 9, eine Führung 15 und/oder eine Einstiegsleiste 16 weiterzuleiten.

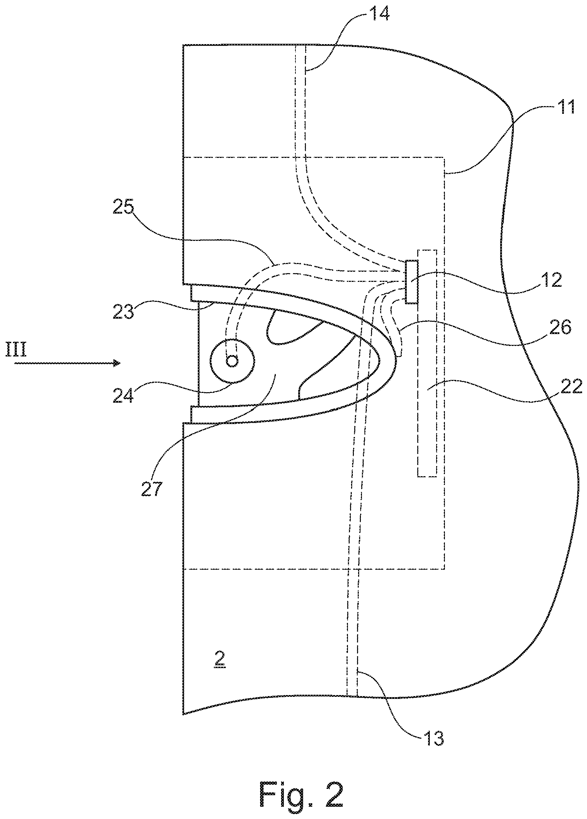

In der FIG. 2 ist eine Detailansicht auf das Kraftfahrzeugtürschloss 11 gemäß dem Pfeil II aus der FIG. 1 wiedergegeben. Zu erkennen ist das Kraftfahrzeugtürschloss 11 mit dem im Kraftfahrzeugtürschloss 11 angeordneten Leuchtmittel 12, das wiederum auf einer Leiterplatte oder einem Elektrokomponententräger oder einer Leiterbahn 22 angeordnet ist. Ausgehend vom Leuchtmittel 12 verzweigt sich der Lichtleiter 13, 14 zusätzlich hin zu weiteren Lichtaustrittsflächen 23, 24. Hierzu sind separate Lichtleiter 25, 26 im Kraftfahrzeugtürschloss 11 angeordnet. Die Lichtaustrittsfläche 23 ist hierbei als umlaufende Lichtaustrittsfläche 23 um ein Einlaufmaul 27 des Kraftfahrzeugtürschlosses 11 herum angeordnet. Die Lichtaustrittsfläche 24 wiederum bildet eine kreisförmige Lichtaustrittsfläche 24 und kann beispielsweise bei einer geöffneten Fahrertür 2 Licht in Richtung des rückwärtigen Bereichs des Kraftfahrzeugs 1 emittieren.

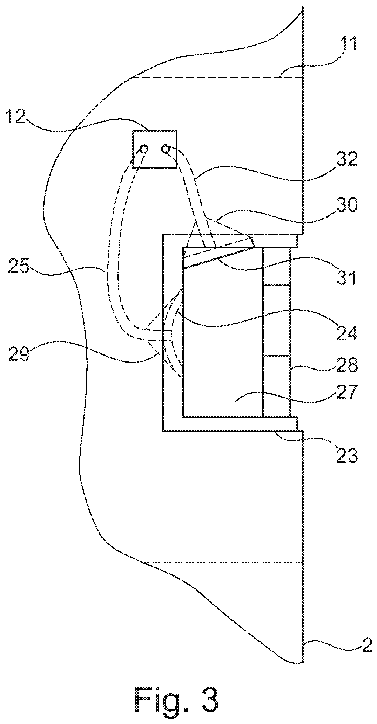

In der FIG. 3 ist eine Ansicht auf das Kraftfahrzeugtürschloss 11 gemäß dem Pfeil III aus der FIG. 2 wiedergegeben. Dargestellt ist eine im Einlaufmaul 27 angeordnete Drehfalle 28, wobei die Lichtaustrittsfläche 23 das Einlaufmaul 27 umlaufend umschließt. Die Lichtaustrittsfläche 24 kann, wie mit den gestrichelten Linien 29, 30 dargestellt, eine kegelige, konkave, konvexe oder ebene Lichtaustrittsfläche 24 bilden. Ein Lichtleiter 32 ist hierbei vom Leuchtmittel 12 ausgehend mit einer ebenen Lichtaustrittsfläche 31 im Einlaufmaul 27 verbunden.

Wie in den Ausführungsbeispielen dargestellt, bietet die Einbindung eines flexiblen Lichtleiters 7, 13, 14, 25, 26, 32 die Möglichkeit, einerseits eine Vielzahl von Lichtaustrittsflächen 9, 19, 20, 23, 24, 31 mit Licht zu versorgen, und andererseits den Vorteil, dass ein sehr leichtes Verlegen des Lichtleiters 7, 13, 14, 25, 26, 32 ermöglicht wird. Der Einbau wird somit wesentlich vereinfacht.

### BEZUGSZEICHENLISTE

- 1: Kraftfahrzeug
- 2: Fahrertür
- 3: Einstiegsbereich
- 4: C-Säule
- 5, 11: Kraftfahrzeugtürschloss
- 6, 12: Leuchtmittel
- 7, 13, 14, 25, 26, 32: Lichtleiter
- 8: Türgriff
- 9, 19, 20, 23, 24, 31: Lichtaustrittsfläche
- 10: Umfeld
- 15: Führung
- 16: Einstiegsleiste
- 17, 18: Verzweigungen
- 21: Markenzeichen
- 22: Elektrokomponententräger, Leiterbahn, Leiterplatte
- 27: Einlaufmaul
- 28: Drehfalle
- 29, 30: gestrichelte Linien als Lichtaustrittsflächen

## Patentansprüche

1. Kraftfahrzeugtürschloss (5, 11), umfassend ein Gesperre, wobei das Gesperre eine Drehfalle (28) und mindestens eine Sperrklinke umfasst, ein Gehäuse mit einer elektrischen Kontaktierung (22) und einem in das Gehäuse integrierten Leuchtmittel (6, 12), wobei das Leuchtmittel (6, 12) mit einem Mittel zum Transport des mittels des Leuchtmittels (6, 12) emittierten Lichts zusammenwirkt, **dadurch gekennzeichnet, dass** das Leuchtmittel (12) auf einem Elektrokomponententräger angeordnet ist, wobei ein flexibles Mittel zum Transport des Lichtes (25, 26) eingesetzt ist, wobei das flexible Mittel (25, 26) als Lichtleiter (25, 26) ausgebildet ist, wobei separate Lichtleiter (25, 26) im Kraftfahrzeugtürschloss (11) angeordnet sind, wobei die Lichtleiter (25, 26) jeweils eine Lichtaustrittsfläche (23, 24) aufweisen, wobei eine Lichtaustrittsfläche (23) als umlaufende Lichtaustrittsfläche (23) um das Einlaufmaul (27) des Kraftfahrzeugtürschlosses (11) herum angeordnet ist und eine weitere Lichtaustrittsfläche (24) eine kreisförmige Lichtaustrittsfläche (24) bildet, die bei einer geöffneten Fahrertür (2) Licht in Richtung des rückwärtigen Bereichs des Kraftfahrzeugs (1) emittiert.

2. Kraftfahrzeugtürschloss (5, 11) nach Anspruch 1, **dadurch gekennzeichnet, dass** der Lichtleiter (7, 13, 14, 25, 26, 32) frei im oder am Gehäuse verlegbar ausgebildet ist.

3. Kraftfahrzeugtürschloss (5, 11) nach Anspruch 2, **dadurch gekennzeichnet, dass** die Lichtaustrittsfläche (9, 19, 20, 23, 24, 31) lichtstreuende und/oder lichtfokussierende Eigenschaften aufweist.

4. Kraftfahrzeugtürschloss (5, 11) nach einem der Ansprüche 1 bis 3, **dadurch gekennzeichnet, dass** am Lichtleiter (7, 13, 14, 25, 26, 32) und/oder im Bereich der Lichtaustrittsfläche (9, 19, 20, 23, 24, 31) des Lichtleiters (7, 13, 14, 25, 26, 32) eine konvexe und/ oder konkave Spiegelfläche angeordnet ist.

5. Kraftfahrzeugtürschloss (5, 11) nach einem der Ansprüche 1 bis 4, **dadurch gekennzeichnet, dass** der Lichtleiter (7, 13, 14, 25, 26, 32) zumindest einen Glasfaseranteil umfasst, bevorzugt vollumfänglich aus einer Glasfaser ausbildbar ist.

6. Kraftfahrzeugtürschloss (5, 11) nach einem der Ansprüche 1 bis 5, **dadurch gekennzeichnet, dass** der Lichtleiter (7, 13, 14, 25, 26, 32) eine Verzweigung (17, 18) umfasst.

7. Kraftfahrzeugtürschloss (5, 11) nach einem der Ansprüche 1 bis 6, **dadurch gekennzeichnet, dass** mittels des Lichtleiters (7, 13, 14, 25, 26, 32) Licht an zumindest zwei Bereiche (9, 15, 16, 19, 21, 23, 24, 27), insbesondere zwei unterschiedliche Bereiche (9, 15, 16, 19, 21, 23, 24, 27) im Kraftfahrzeug (1) leitbar ist.

8. Kraftfahrzeugtürschloss (5, 11) nach einem der Ansprüche 1 bis 7, **dadurch gekennzeichnet, dass** die Lichtaustrittsfläche (9, 19, 20, 23, 24, 31) eine Neigung von 1° bis 10°, vorzugsweise eine Neigung von 2 bis 8° und noch bevorzugter eine Neigung von 3 bis 5° in Bezug auf eine Lichtaustrittsfläche (9, 19, 20, 23, 24, 31) des Lichtleiters (7, 13, 14, 25, 26, 32) aufweist.

9. Kraftfahrzeugtürschloss (5, 11) nach einem der Ansprüche 1 bis 8, **dadurch gekennzeichnet, dass** der Lichtleiter (7, 13, 14, 25, 26, 32) und die Lichtaustrittsfläche (9, 19, 20, 23, 24, 31) einstückig ausgebildet sind.

## Claims

1. Motor vehicle door latch (5, 11) comprising a locking mechanism, the locking mechanism comprising a catch (28) and at least one pawl, a housing having an electrical contact (22) and a lighting means (6, 12) integrated into the housing, wherein the lighting means (6, 12) interacts with a means for transporting the light emitted by means of the lighting means (6, 12), **characterized in that** the lighting means (12) is arranged on an electrical component carrier, wherein a flexible means is used for transporting the light (25, 26), wherein the flexible means (25, 26) is designed as a light guide (25, 26), wherein separate light guides (25, 26) are arranged in the motor vehicle door latch (11), wherein the light guides (25, 26) each have a light exit surface (23, 24), wherein a light exit surface (23) is arranged as a light exit surface (23) extending around the inlet mouth (27) of the motor vehicle door lock (11) and a further light exit surface (24) forms a circular light exit surface (24) which emits light in the direction of the rear region of the motor vehicle (1) when the driver door (2) is open.

2. Motor vehicle door latch (5, 11) according to claim 1,
**characterized in that** the light guides (7, 13, 14, 25, 26, 32) are designed to be freely displaceable in or on the housing.

3. Motor vehicle door latch (5, 11) according to claim 2,
**characterized in that** the light exit surface (9, 19, 20, 23, 24, 31) has lightscattering and/or light-focusing properties.

4. Motor vehicle door latch (5, 11) according to any of claims 1 to 3, **characterized in that** a convex and/or concave mirror surface is arranged on the light guide (7, 13, 14, 25, 26, 32) and/or in the region of the light exit surface (9, 19, 20, 23, 24, 31) of the light guide (7, 13, 14, 25, 26, 32).

5. Motor vehicle door latch (5, 11) according to any of claims 1 to 4, **characterized in that** the light guide (7, 13, 14, 25, 26, 32) comprises at least one glass fiber portion, preferably can be formed in its entirety from a glass fiber.

6. Motor vehicle door latch (5, 11) according to any of claims 1 to 5, **characterized in that** the light guide (7, 13, 14, 25, 26, 32) comprises branching (17, 18).

7. Motor vehicle door latch (5, 11) according to any of claims 1 to 6, **characterized in that** by means of the light guide (7, 13, 14, 25, 26, 32), light can be guided to at least two regions (9, 15, 16, 19, 21, 23, 24, 27), in particular two different regions (9, 15, 16, 19, 21, 23, 24, 27) in the motor vehicle (1).

8. Motor vehicle door latch (5, 11) according to any of claims 1 to 7, **characterized in that** the light exit surface (9, 19, 20, 23, 24, 31) has an inclination of 1° to 10°, preferably an inclination of 2 to 8°, and more preferably an inclination of 3 to 5°, with respect to a light exit surface (9, 19, 20, 23, 24, 31) of the light guide (7, 13, 14, 25, 26, 32).

9. Motor vehicle door latch (5, 11) according to any of claims 1 to 8, **characterized in that** the light guide (7, 13, 14, 25, 26, 32) and the light exit surface (9, 19, 20, 23, 24, 31) are formed in one piece.

## Revendications

1. Serrure de porte de véhicule automobile (5, 11), comprenant un mécanisme de verrouillage, le mécanisme de verrouillage comprenant un loquet rotatif (28) et au moins un cliquet de verrouillage, un boîtier comportant un moyen de mise en contact électrique (22) et un moyen lumineux (6, 12) intégré dans le boîtier, le moyen lumineux (6, 12) coopérant avec un moyen permettant le transport de la lumière émise au moyen du moyen lumineux (6, 12),
**caractérisée en ce que** le moyen lumineux (12) est disposé sur un support de composants électriques, un moyen flexible permettant le transport de la lumière (25, 26) étant utilisé, le moyen flexible (25, 26) étant réalisé en tant que guide de lumière (25, 26), des guides de lumière (25, 26) séparés étant disposés dans la serrure de porte de véhicule automobile (11), les guides de lumière (25, 26) présentant respectivement une surface de sortie de lumière (23, 24), une surface de sortie de lumière (23) étant disposée autour de la bouche d'entrée (27) de la serrure de porte de véhicule automobile (11) en tant que surface de sortie de lumière (23) circonférentielle et une autre surface de sortie de lumière (24) formant une surface de sortie de lumière (24) circulaire qui émet de la lumière en direction de la zone arrière du véhicule automobile (1) lorsqu'une porte de conducteur (2) est ouverte.

2. Serrure de porte de véhicule automobile (5, 11) selon la revendication 1, **caractérisée en ce que** le guide de lumière (7, 13, 14, 25, 26, 32) est réalisé de manière à pouvoir être posé librement dans ou sur le boîtier.

3. Serrure de porte de véhicule automobile (5, 11) selon la revendication 2, **caractérisée en ce que** la surface de sortie de lumière (9, 19, 20, 23, 24, 31) présente des propriétés de diffusion de lumière et/ou de focalisation de lumière.

4. Serrure de porte de véhicule automobile (5, 11) selon l'une quelconque des revendications 1 à 3, **caractérisée en ce qu'**une surface de miroir convexe et/ou concave est disposée sur le guide de lumière (7, 13, 14, 25, 26, 32) et/ou dans la zone de la surface de sortie de lumière (9, 19, 20, 23, 24, 31) du guide de lumière (7, 13, 14, 25, 26, 32).

5. Serrure de porte de véhicule automobile (5, 11) selon l'une quelconque des revendications 1 à 4, **caractérisée en ce que** le guide de lumière (7, 13, 14, 25, 26, 32) comprend au moins une partie de fibre de verre, de préférence peut être entièrement façonné à partir de fibre de verre.

6. Serrure de porte de véhicule automobile (5, 11) selon l'une quelconque des revendications 1 à 5, **caractérisée en ce que** le guide de lumière (7, 13, 14, 25, 26, 32) comprend un branchement (17, 18).

7. Serrure de porte de véhicule automobile (5, 11) selon l'une quelconque des revendications 1 à 6, **caractérisée en ce que** de la lumière peut être guidée dans le véhicule automobile (1) au niveau d'au moins deux zones (9, 15, 16, 19, 21, 23, 24, 27), en particulier de deux zones (9, 15, 16, 19, 21, 23, 24, 27) différentes, au moyen du guide de lumière (7, 13, 14, 25, 26, 32).

8. Serrure de porte de véhicule automobile (5, 11) selon l'une quelconque des revendications 1 à 7, **caractérisée en ce que** la surface de sortie de lumière (9, 19, 20, 23, 24, 31) présente une inclinaison de 1° à 10°, de préférence une inclinaison de 2 à 8° et plus préférablement une inclinaison de 3 à 5° par rapport à une surface de sortie de lumière (9, 19, 20, 23, 24, 31) du guide de lumière (7, 13, 14, 25, 26, 32).

9. Serrure de porte de véhicule automobile (5, 11) selon l'une quelconque des revendications 1 à 8, **caractérisée en ce que** le guide de lumière (7, 13, 14, 25, 26, 32) et la surface de sortie de lumière (9, 19, 20, 23, 24, 31) sont réalisés d'une seule pièce.
